# EUROPEAN PATENT APPLICATION

(11) **EP 3 576 435 A1**
(43) Date of publication of application: **04.12.2019**
(21) Application number: 17893975.7
(22) Date of filing: 21.11.2017
(51) Int. Cl.: H04R 29/00, B60R 11/02

(54) **SPEAKER OPERATION CONFIRMATION DEVICE**

(30) Priority: 26.01.2017 JP 2017012162
(71) Applicant: Hino Motors, Ltd., Hino-shi, Tokyo 191-8660 (JP)
(72) Inventor: KOBAYASHI, Kozue, Hino-shi Tokyo 191-8660 (JP); KAMAGATA, Kazuki, Hino-shi Tokyo 191-8660 (JP)
(74) Representative: D Young & Co LLP
(86) International application number: PCT/JP2017/041870
(87) International publication number: WO 2018/139022

(57) **Abstract**

A speaker operation confirmation device confirms operation of a right speaker attached on a right side of a vehicle and a left speaker attached on a left side of the vehicle. The speaker operation confirmation device includes a confirmation sound acquiring unit that acquires a confirmation sound to be generated by the right speaker and the left speaker, and a confirmation sound generating unit that causes the right speaker and the left speaker to generate the confirmation sound acquired by the confirmation sound acquiring unit. The confirmation sound is a confirmation sound in which a sound volume of either of the right speaker or the left speaker is reduced and a sound volume of the other one of the right speaker and the left speaker is increased with elapse of time.

## Description

### Technical Field

The present invention relates to a speaker operation confirmation device which confirms operation of a right speaker attached on a right side of a vehicle and a left speaker attached on a left side of the vehicle.

### Background Art

In vehicles, a right speaker is attached on a right side of a vehicle and a left speaker is attached on a left side of the vehicle. The right speaker and the left speaker are used as speakers for generating various alarm sounds for a driver. Accordingly, there is a need for the right speaker and the left speaker to be in a state capable of generating a sound at all times. Here, Patent Literature 1 proposes a speaker device in which disconnection detection is provided in a wiring path of speakers and operation of the speakers is systematically confirmed.

### Citation List

### Patent Literature

Patent Literature 1: Japanese Unexamined Patent Publication No. 2015-220711

### Summary of Invention

### Technical Problem

However, in a speaker device disclosed in Patent Literature 1, operation of speakers is systematically confirmed. Accordingly, there is a possibility that a driver may not notice malfunction of the speakers.

An object of an aspect of the present invention is to provide a speaker operation confirmation device which can cause a driver to notice malfunction of speakers.

### Solution to Problem

According to an aspect of the present invention, there is provided a speaker operation confirmation device which confirms operation of a right speaker attached on a right side of a vehicle and a left speaker attached on a left side of the vehicle. The speaker operation confirmation device includes a confirmation sound acquiring unit that acquires a confirmation sound to be generated by the right speaker and the left speaker, and a confirmation sound generating unit that causes the right speaker and the left speaker to generate the confirmation sound acquired by the confirmation sound acquiring unit. The confirmation sound is a confirmation sound in which a sound volume of either of the right speaker or the left speaker is reduced and a sound volume of the other one of the right speaker and the left speaker is increased with elapse of time.

In this speaker operation confirmation device, if a confirmation sound is generated by the right speaker and the left speaker, the sound volume of the confirmation sound generated by either of the right speaker or the left speaker is reduced and the sound volume of the confirmation sound generated by the other of the right speaker and the left speaker is increased with elapse of time. Accordingly, a sound image of the confirmation sound generated from the right speaker or the left speaker moves from the right to the left or from the left to the right. A driver can instinctively recognize movement of the sound image. Then, based on a position of the sound image or the sound volume of the confirmation sound, the driver can judge which speaker of the right speaker and the left speaker has malfunctioned. Accordingly, the driver can notice malfunction of the speakers.

The speaker operation confirmation device may further include a storage unit that stores the confirmation sound. The confirmation sound acquiring unit may acquire the confirmation sound from the storage unit. In this speaker operation confirmation device, since the confirmation sound is stored in the storage unit, the confirmation sound acquiring unit can promptly acquire the confirmation sound.

The confirmation sound generating unit may cause the right speaker and the left speaker to generate the confirmation sound at a timing when an ignition of the vehicle is turned on. In this speaker operation confirmation device, since the confirmation sound is generated by the right speaker and the left speaker at the timing when the ignition of the vehicle is turned on, the driver can notice malfunction of the right speaker and the left speaker before starting to drive the vehicle.

The confirmation sound may be a melody or a message. In this speaker operation confirmation device, since the confirmation sound is a melody or a message, the driver can more easily recognize whether or not the sound image moves, compared to when the confirmation sound is a general warning sound.

### Advantageous Effects of Invention

According to the aspect of the present invention, a driver can notice malfunction of speakers.

### Brief Description of Drawings

FIG. 1 is a schematic block diagram of a speaker operation confirmation device according to the present embodiment.
FIG. 2 is a schematic view of a vehicle in which the speaker operation confirmation device is mounted.
FIG. 3 is a view illustrating a relationship between a sound volume of a confirmation sound generated from a right speaker and a left speaker, and a position of a sound image.

### Description of Embodiment

Hereinafter, an embodiment of the present invention will be described with reference to the drawings. The same reference signs are applied to the same elements in description of the drawings, and duplicated description will be omitted.

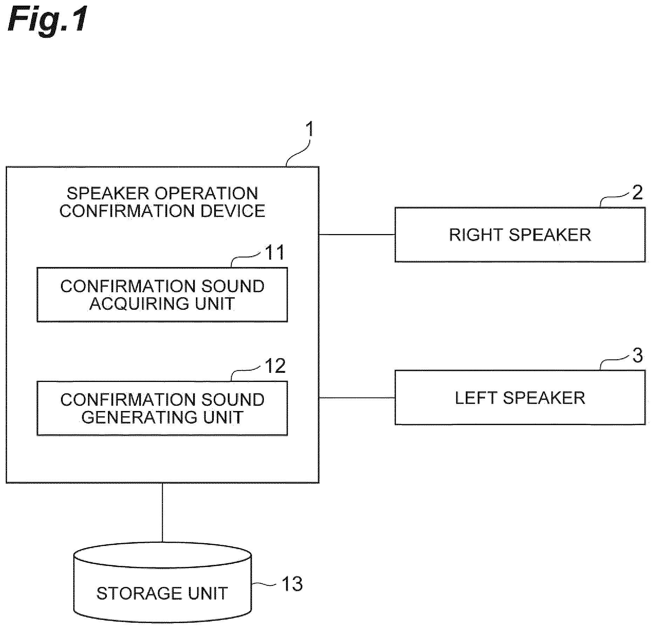

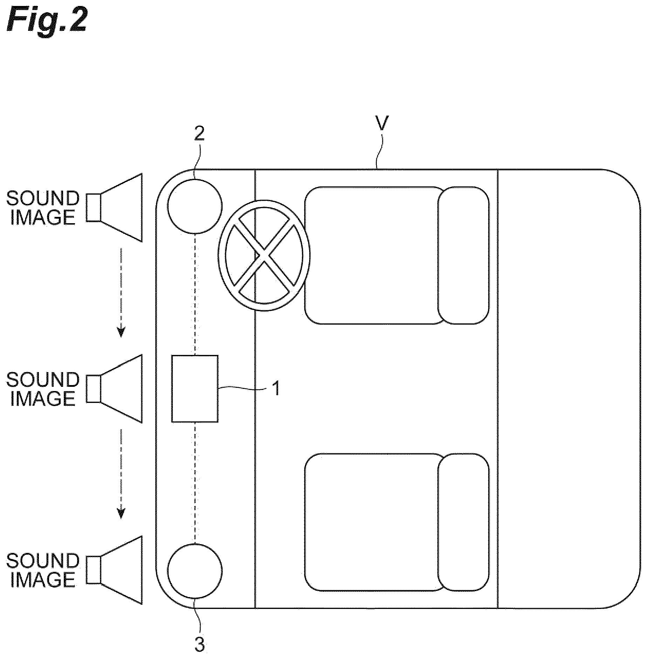

As illustrated in FIGS. 1 and 2, a speaker operation confirmation device 1 according to the present embodiment is mounted in a vehicle V. A right speaker 2 is attached on the right side of the vehicle V, and a left speaker 3 is attached on the left side of the vehicle V. The right speaker 2 and the left speaker 3 are disposed inside a cabin of the vehicle V. In a vehicle width direction of the vehicle V, the right speaker 2 is disposed on the right side of a driver's seat (not illustrated), and the left speaker 3 is disposed on the left side of the driver's seat. For example, the right speaker 2 is embedded on the right side of a meter panel (not illustrated), and the left speaker 3 is embedded on the left side of the meter panel. Then, the right speaker 2 generates audio such as a warning sound, such that a driver seated in the driver's seat can hear the audio from the right. In addition, the left speaker 3 generates audio such as a warning sound, such that the driver seated in the driver's seat can hear the audio from the left.

The speaker operation confirmation device 1 is a device which confirms operation of the right speaker 2 and the left speaker 3. For example, the speaker operation confirmation device 1 is constituted of a microcomputer embedded in the meter panel. The speaker operation confirmation device 1 functionally includes a confirmation sound acquiring unit 11 and a confirmation sound generating unit 12.

The confirmation sound acquiring unit 11 acquires a confirmation sound generated by the right speaker 2 and the left speaker 3. A storage unit 13, in which the confirmation sound to be generated by the right speaker 2 and the left speaker 3 is stored, is connected to the speaker operation confirmation device 1. Examples of the storage unit 13 include a ROM and a hard disk.

The confirmation sound stored in the storage unit 13 is a confirmation sound in which a sound volume of either of the right speaker 2 or the left speaker 3 is reduced and a sound volume of the other of the right speaker 2 and the left speaker 3 is increased with elapse of time.

Any confirmation sound may be employed as the confirmation sound. However, from the viewpoint of recognizability of the confirmation sound, it is preferable that the confirmation sound be a melody or a message.

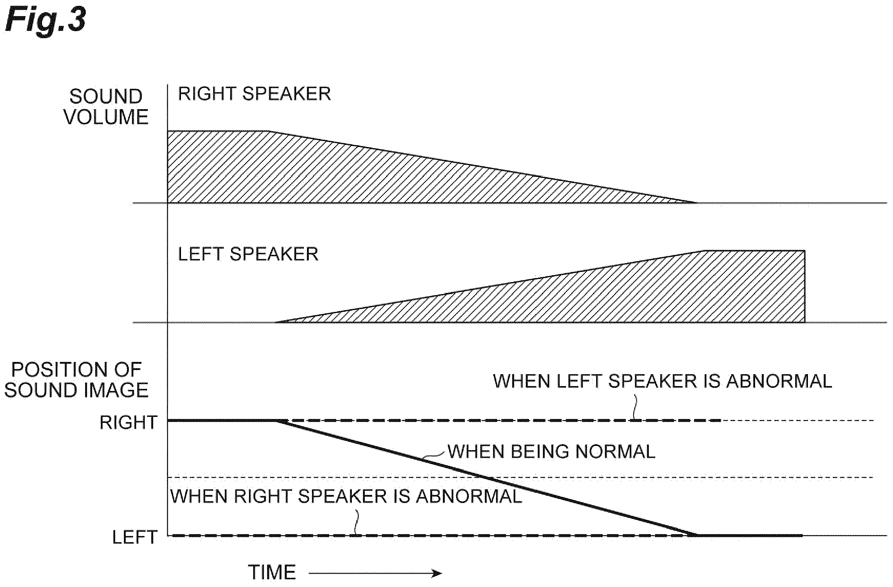

There is no need for the sound volume of the confirmation sound generated from the right speaker 2 and the left speaker 3 to change at all times. The sound volume may change in stages or may change in only a certain time section. In the example illustrated in FIG. 3, a warning sound generated from the right speaker 2 has a constant sound volume in a first time section at the beginning. The sound volume is gradually reduced in a second time section thereafter and is muted in a third time section thereafter. On the other hand, a warning sound generated from the left speaker 3 is muted in the first time section at the beginning. The sound volume is gradually increased in the second time section thereafter and has a constant sound volume in the third time section thereafter.

Regarding the confirmation sound, the storage unit 13 may store right audio to be generated by the right speaker 2 and left audio to be generated by the left speaker 3 as separate confirmation sounds. The right audio to be generated by the right speaker 2 and the left audio to be generated by the left speaker 3 may be stored as one confirmation sound.

Then, the confirmation sound acquiring unit 11 acquires a confirmation sound of the storage unit 13 and transmits this acquired confirmation sound to the confirmation sound generating unit 12.

The confirmation sound generating unit 12 causes the right speaker 2 and the left speaker 3 to generate the confirmation sound acquired by the confirmation sound acquiring unit 11. That is, the confirmation sound generating unit 12 is electrically connected to the right speaker 2 and the left speaker 3 and causes the right speaker 2 and the left speaker 3 to generate the confirmation sound transmitted from the confirmation sound acquiring unit 11.

The timing when a confirmation sound is generated by the right speaker 2 and the left speaker 3 is not particularly limited. However, from the viewpoint of confirming operation of the speakers at all times before starting to drive the vehicle, it is preferable that the timing be a timing when an ignition (not illustrated) of the vehicle V is turned on. That is, the speaker operation confirmation device 1 is electrically connected to an ECU (not illustrated) of the vehicle V. Then, if information indicating that the ignition is turned on is transmitted to the speaker operation confirmation device 1 from the ECU, the confirmation sound acquiring unit 11 acquires the confirmation sound, and the confirmation sound generating unit 12 causes the right speaker 2 and the left speaker 3 to generate the confirmation sound.

In this manner, in the speaker operation confirmation device 1 according to the present embodiment, if a confirmation sound is generated by the right speaker 2 and the left speaker 3, the sound volume of the confirmation sound generated from either of the right speaker 2 or the left speaker 3 is reduced and the sound volume of the confirmation sound generated from the other of the right speaker 2 and the left speaker 3 is increased with elapse of time. Accordingly, a sound image of the confirmation sound generated from the right speaker 2 or the left speaker 3 moves from the right to the left or from the left to the right. In the example of FIG. 3, a sound image of the confirmation sound moves from the right to the left. A driver can instinctively recognize movement of the sound image. Then, based on a position of the sound image and the sound volume of the confirmation sound, the driver can judge which speaker of the right speaker 2 and the left speaker 3 has malfunctioned. For example, as illustrated in FIG. 3, when the sound image of the confirmation sound is fixed on the right side, it is possible to determine that the left speaker 3 has malfunctioned. When the sound image of the confirmation sound is fixed on the left side, it is possible to determine that the right speaker 2 has malfunctioned. Accordingly, the driver can notice malfunction of the right speaker 2 and the left speaker 3.

In addition, since the confirmation sound is stored in the storage unit 13, the confirmation sound acquiring unit 11 can promptly acquire the confirmation sound.

In addition, when a confirmation sound is generated by the right speaker 2 and the left speaker 3 at the timing when the ignition of the vehicle V is turned on, the driver can notice malfunction of the right speaker 2 and the left speaker 3 before starting to drive the vehicle V.

In addition, when the confirmation sound is a melody or a message, the driver can more easily recognize whether or not the sound image moves, compared to when the confirmation sound is a general warning sound.

Hereinabove, an embodiment suitable for the present invention has been described. However, the present invention is not limited to the foregoing embodiment, and the present invention may be modified within a range not changing the gist disclosed in each of the claims or may be applied to other embodiments.

### Reference Signs List

1 Speaker operation confirmation device
2 Right speaker
3 Left speaker
11 Confirmation sound acquiring unit
12 Confirmation sound generating unit
13 Storage unit
V Vehicle

## Claims

1. A speaker operation confirmation device which confirms operation of a right speaker attached on a right side of a vehicle and a left speaker attached on a left side of the vehicle, the device comprising:
a confirmation sound acquiring unit that acquires a confirmation sound to be generated by the right speaker and the left speaker; and
a confirmation sound generating unit that causes the right speaker and the left speaker to generate the confirmation sound acquired by the confirmation sound acquiring unit,
wherein the confirmation sound is a confirmation sound in which a sound volume of either of the right speaker or the left speaker is reduced and a sound volume of the other one of the right speaker and the left speaker is increased with elapse of time.

2. The speaker operation confirmation device according to claim 1, further comprising:
a storage unit that stores the confirmation sound,
wherein the confirmation sound acquiring unit acquires the confirmation sound from the storage unit.

3. The speaker operation confirmation device according to claim 1 or 2,
wherein the confirmation sound generating unit causes the right speaker and the left speaker to generate the confirmation sound at a timing when an ignition of the vehicle is turned on.

4. The speaker operation confirmation device according to any one of claims 1 to 3,
wherein the confirmation sound is a melody or a message.
